# EUROPÄISCHE PATENTSCHRIFT

(11) **EP 3 442 870 B1**
(45) Veröffentlichungstag und Bekanntmachung des Hinweises auf die Patenterteilung: **25.12.2019**
(21) Anmeldenummer: 17705851.8
(22) Anmeldetag: 15.02.2017
(51) Int. Cl.: B65B 21/12, B65B 21/18, B65G 47/91, B65B 59/04

(54) **PACKELEMENT**
PACKING ELEMENT
ÉLÉMENT D'EMBALLAGE

(30) Priorität: 14.04.2016 DE 102016106943
(43) Veröffentlichungstag der Anmeldung: 20.02.2019
(73) Patentinhaber: KHS GmbH, 44143 Dortmund (DE)
(72) Erfinder: DINGES, Frank, 67590 Monsheim (DE); DOLATA, Jürgen, 67549 Worms (DE)
(86) Internationale Anmeldenummer: PCT/EP2017/053413
(87) Internationale Veröffentlichungsnummer: WO 2017/178137

(56) Entgegenhaltungen:
- DE-A1- 1 938 295
- DE-A1- 3 025 091
- DE-B3-102007 048 245
- JP-B2- 3 468 803
- US-A- 3 938 847
- US-A1- 2009 223 177

## Beschreibung

Die vorliegende Erfindung betrifft ein Packelement zur Befestigung an einem insbesondere flächigen, sich in der Regel horizontal erstreckenden Halteelement, wobei in der Regel viele Packelemente nebeneinander matrixförmig an dem Halteelement angeordnet sind, um so zum Beispiel 12 oder 20 Flaschen eines Bierkastens gleichzeitig entnehmen und einsetzen zu können. Jedes Packelement hat ein längliches Tragelement, an dessen einem (oberen) Ende ein Befestigungsteil und an dessen anderem Ende ein Greifteil angeordnet ist. Das Tragelement ist in dem Befestigungsteil axial verschiebbar gehalten, wobei das Befestigungsteil mittels einer am Greifteil abgestützten Feder in seine Stellung an dem einen Ende des Tragelements vorgespannt ist. Das Befestigungsteil ist ausgebildet zur Befestigung des Packelements im Bereich mindestens einer in dem Halteelement angeordneten Perforierung und das Greifteil ist ausgebildet zum Greifen eines Behälters, insbesondere einer Flasche, insbesondere an dessen oberen Ende, das heißt im Verschlussbereich. Derartige Packelemente werden aufgrund ihrer Form auch als Packtulpen bezeichnet.

Die bekannten Packtulpen haben einen zur Anlage an die Oberseite des Halteelements konzipierten oberen Verbindungsteil und einen zur Anlage an die Unterseite des Halteelements konzipierten unteren Verbindungsteil. Zur Montage des Packelements an dem Halteelement werden der obere und der untere Verbindungsteil miteinander verbunden. Diese Ausgestaltung hat zur Folge, dass zur Demontage und auch zur Montage eines Halteelementes das Halteelement zwingend sowohl von oben, als auch von unten zugänglich sein muss, da ein sicherer Halt des Halteelements nur durch das Zusammenwirken des von oben zu montierenden oberen Verbindungsteiles mit dem von unten zu montierenden unteren Verbindungsteils erzielt werden kann. Diese Montage ist vergleichsweise kompliziert und führt zu langen Standzeiten im Fall eines notwendigen Wechsels eines Packelements an dem Halteelement.

Ein Packelement mit den Merkmalen des Oberbegriffs des Anspruchs 1 ist aus der DE 30 25 091 A1 bekannt.

Es ist Aufgabe der Erfindung, ein Packelement zu schaffen, das leichter und auch schneller zu montieren ist.

Diese Aufgabe wird erfindungsgemäß durch ein Packelement mit den Merkmalen des Anspruchs 1 gelöst. Die Aufgabe wird ebenfalls durch eine Packvorrichtung gemäß Anspruch 14 gelöst. Vorteilhafte Weiterbildungen der Erfindung sind Gegenstand der abhängigen Ansprüche. Vorteilhafte Weiterbildungen der Erfindung sind auch in der Beschreibung und in den Zeichnungen beschrieben.

Erfindungsgemäß weist das Befestigungsteil wenigstens ein erstes Montageelement auf, welches mit wenigstens einem am Haltelement angeordneten oder an diesem ausgebildeten komplementären zweiten Montagelement zusammenwirkt, wobei das erste Montagelement in einer Montagestellung lösbar an dem zweiten Montageelement festlegbar ist. Auf diese Weise kann das Packelement äußerst schnell an dem Halteelement festgelegt und wieder von diesem gelöst werden, wobei dieser Vorgang vorzugsweise von nur einer Seite des Halteelements durchgeführt werden muss, vorzugsweise von der Unterseite des Halteelements aus. Dies erleichtert die Montage und Demontage des Packelements am Halteelement beträchtlich.

Gemäß der Erfindung hat das Befestigungsteil als erstes Montageelement wenigstens einen elastisch auslenkbaren oder bewegbaren Rastabschnitt, der konzipiert ist, das Halteelement im Randbereich der Perforierung zu hintergreifen, wobei die Perforierung selbst in diesem Fall das zweite Montageelement des Halteelements bildet.

Vorzugsweise hat das Befestigungsteil mehrere Rastabschnitte, die möglichst gleichmäßig verteilt um den Umfang des Befestigungsteils angeordnet sind, so dass die Rastabschnitte den Randbereich des Halteelements im Bereich einer insbesondere kreisrunden Perforierung hintergreifen können, was zu einer sehr stabilen Verbindung führt. Dies kann so geschehen, dass die elastisch auslenkbaren oder bewegbaren Rastabschnitte beim Einschieben des Befestigungsteils in die Perforierung aus ihrer entspannten Ruhestellung auslenken und nach dem Vorbeigleiten an der Perforierung und dem Anliegen der Anlagefläche an einer Seite des Halteelements in ihre Ruhestellung zurückschnappen. Auf diese Weise wird das Halteelement sicher zwischen der Anlagefläche und dem Rastabschnitt des Rastelements gehalten, wobei eine starre und sichere Verbindung zwischen dem Halteelement und dem Befestigungsteil realisiert wird. Da somit das Befestigungsteil durch eine Rastverbindung an dem Halteelement gehalten ist, kann das Packelement wesentlich schneller im Fall eines Bruches oder einer Beschädigung ausgewechselt werden.

Es ist noch klarzustellen, dass üblicherweise das Tragelement axial bewegbar in dem Befestigungsteil gehalten ist, wobei eine Feder zwischen dem Greifteil und dem Befestigungsteil angeordnet ist, welche das Tragelement umgibt und an den einander zugewandten Seiten des Greifteils und des Befestigungsteils anliegt. Auf diese Weise kann das Tragelement beim Aufsetzen des Greifteils auf eine Flasche gegen die Federkraft nach oben aus dem Befestigungsteil heraustreten relativ zum Befestigungsteil verschieben, wobei das Tragelement in einem solchen Fall weiter nach oben aus dem Befestigungsteil herausragt,, so dass mit mehreren an einem Halteelement angeordneten Packelementen Flaschen oder Behälter unterschiedlicher Höhe gegriffen werden können, was insbesondere beim Entleeren von Mehrwegbehältern eine Rolle spielt, wenn sich eine typfremde Flasche in einem Kasten befindet.

Der Rastabschnitt an dem Rastelement ist vorzugsweise als Rastnase an einer ersten Seite des Rastelements ausgebildet. Das Rastelement ist dann derart elastisch, dass es beim Einschieben des Befestigungsteils in die Perforierung eines Halteelements aus seiner unausgelenkten Ruhestellung aus seiner ersten Seite aus in einer der Rastnase abgewandte zweite Seite auslenkbar ist und nach dem Anliegen der Anlagefläche des Befestigungsteils an dem Halteelement aufgrund seiner Elastizität selbstständig in seine unausgelenkte Ruhestellung zurückfedert, wodurch das Befestigungsteil am Halteelement verrastet. Das Verrasten des Befestigungsteils an dem Halteelement erfordert somit keine weiteren mechanischen Elemente oder Werkzeuge zur Festlegung des Befestigungsteils an dem Halteelement. Um die Raststellung zu sichern, kann jedoch auf einer der ersten Seite abgewandten zweiten Seite des Rastelements in einer Sicherungsstellung ein Sicherungselement angeordnet sein, welches Sicherungselement eine elastische Auslenkung oder Bewegung des Rastelements in Richtung seiner zweiten Seite verhindert. Auf diese Weise kann durch das Sicherungselement die unausgelenkte Ruhe- oder Raststellung des Rastelements fixiert werden, womit ein versehentliches Lösen aufgrund der Elastizität der Rastelemente ausgeschlossen ist.

In einer vorteilhaften Weiterbildung der Erfindung hat das Befestigungsteil wenigstens ein oberes Verbindungsteil, das zur Anlage an einer Oberseite eines Halteelements konzipiert ist und zumindest einen, vorzugsweise mehrere, Rastelemente aufweist. Das Befestigungsteil hat ferner auch ein unteres Verbindungsteil, welches zur Anlage an der Unterseite eines Halteelements konzipiert ist und mit dem oberen Verbindungsteil verbindbar ist. Auf diese Weise wird das Halteelement zwischen dem oberen Verbindungsteil und dem unteren Verbindungsteil festgelegt, was wiederum eine verbesserte Sicherung des Befestigungsteils an dem Halteelement mit sich bringt.

Vorzugsweise ist das untere Verbindungsteil durch eine Drehung um die Längsachse des Tragelements mit dem oberen Verbindungsteil verbindbar. Auf diese Weise lässt sich das untere Verbindungsteil mit dem oberen Verbindungsteil ohne großen Aufwand und ohne Werkzeug miteinander verbinden. In einer dazu alternativen Ausführungsform ist das Befestigungsteil dazu konzipiert, ausschließlich von einer Seite, vorzugsweise von unten in die Perforierung eines sich horizontal erstreckenden Halteelements eingesetzt zu werden, wozu das Befestigungsteil zum Beispiel einen Steckzylinder aufweisen kann, der durch die Perforierung hindurchgeschoben wird. Es ist dann vorzugsweise das wenigstens eine Rastelement am Umfangsbereich des Steckzylinders bzw. des vorzugsweise kreisrunden Befestigungsteils angeordnet, so dass der Rastabschnitt des Rastelements dann gegen die Oberseite des Halteelements anliegt, während die Anlagefläche des Befestigungsteils gegen die Unterseite des Halteelements anliegt. Der Vorteil dieses Packelements besteht darin, dass es von einer Seite aus, bevorzugt von der Unterseite, an dem Halteelement befestigbar ist, ohne dass eine Montagetätigkeit von der anderen Seite aus erforderlich wäre. Dies erleichtert und verkürzt die Montage und Demontage des Packelements beträchtlich und damit die Stillstandszeiten der Packmaschine erheblich.

Das Tragelement hat üblicherweise einen die Stirnseite des Befestigungsteils hintergreifenden Flansch, durch welchen ein Anschlag des Tragelements hinsichtlich seiner Bewegung (relativ zum Befestigungsteil) nach unten gebildet wird. In dem vorstehend genannten Ausführungsbeispiel ist der Flansch maximal so groß, praktischerweise ein wenig kleiner als die Perforierung des Halteelements, so dass der Flansch von unten ebenfalls durch die Perforierung geschoben werden kann. Vorzugsweise bilden somit der Flansch und der Steckzylinder des Befestigungsteils im senkrechten Schnitt ein fluchtendes Element, d.h. das horizontale Profil des Flansches entspricht dem horizontalen Profil des Steckzylinders, oder aber ist kleiner als das horizontale Profil des Steckzylinders.

In einer vorteilhaften Weiterbildung der Erfindung sind mehrere Rastelemente kranzförmig um den Umfang des Befestigungsteils verteilt angeordnet, so dass über den gesamten Umfang des Befestigungsteils eine gute Verrastung an dem Halteelement im Bereich der Perforation sichergestellt wird. Dies führt zu einer sichereren Verbindung des Befestigungsteils, als wenn nur ein Rastelement vorgesehen wäre. Vorzugsweise sind die Rastelemente an gegenüberliegenden Seiten relativ zur Achse des Befestigungsteils angeordnet bzw. gleichmäßig voneinander beabstandet. So liegen zum Beispiel zwei Rastelemente sich um 180° versetzt gegenüber, während drei Rastelemente um 120° versetzt sind, vier Rastelemente um 90° etc.

Vorzugsweise ist das Befestigungsteil als hohlzylindrisches Teil ausgebildet und hat eine vertikal durchgehende, insbesondere zentrische, Aufnahme für das Tragelement. Ein derartiges Befestigungsteil lässt sich zum einen gut in einer Perforierung des Halteelements festlegen und erlaubt auf der anderen Seite eine problemlose vertikale bzw. axiale Bewegung des Tragelements in dem Befestigungsteil.

Vorzugsweise ist zwischen dem Befestigungsteil und dem Greifteil eine Feder angeordnet, insbesondere eingespannt, die das Tragelement vorzugsweise umgibt. Auf diese Weise wird das Packelement von dem Halteelement bzw. von der Unterseite des Befestigungsteils nach unten weg gespannt, so dass, wenn das Greifteil auf einen Behälter, zum Beispiel auf eine Flasche, auftrifft, das Tragelement aus dem Befestigungsteil nach oben austreten kann. Auf diese Weise entsteht kein Bruch, wenn Flaschen aus einem Kasten entnommen werden und eine der Flaschen eine andere Höhe als die anderen Flaschen hat.

Die Erfindung betrifft ebenfalls eine Packvorrichtung enthaltend wenigstens eine gesteuert bewegbare Haltevorrichtung mit wenigstens einem flächigen, insbesondere sich horizontal erstreckenden Halteelement. Eine derartige Haltevorrichtung kann zum Beispiel durch einen Roboterarm oder durch irgendeine andere Greif- oder Fördervorrichtung gebildet sein, die das Halteelement in Richtung seiner Ebene, aber auch quer zur Richtung seiner Ebene, bewegen kann. An dem Halteelement ist eine Vielzahl von Packelementen vorzugsweise in der Art einer Matrix gehalten. Um zum Beispiel einen Zwanziger-Bierkasten zu halten, müssen 4 x 5 Packelemente in entsprechender Matrixanordnung angeordnet sein. Bei einem 12er Sprudelkasten sind es 3 x 4 Packelemente. Jedes Packelement erstreckt sich von der Fläche des Halteelements aus nach unten, wobei jedes Packelement mit seinem Befestigungsteil wenigstens eine Perforierung des Halteelements durchsetzt und mit dem Rastabschnitt seines Rastelements das Haltelement im Randbereich der Perforierung hintergreift. Bei einer derartigen Packvorrichtung lässt sich ein gebrochenes oder beschädigtes Packelement sehr schnell auswechseln.

In einer vorteilhaften Weiterbildung der Erfindung ist die Perforierung im Halteelement kreisrund und hat wenigstens eine von der kreisrunden Perforierung ausgehende Fixierausnehmung, die mit wenigstens einem am Befestigungsteil ausgebildeten Sicherungsvorsprung zusammenwirkt, um das Befestigungsteil rotativ unbeweglich an dem Halteelement festzulegen.

In einer vorteilhaften Weiterbildung der Erfindung weist das Befestigungsteil wenigstens ein oberes Verbindungsteil auf, das an einer Oberseite des Halteelements mit seiner Anlagefläche anliegt und zumindest einen, vorzugsweise mehrere, Rastelemente aufweist, die mit ihren Rastabschnitten an der Unterseite des Halteelements anliegen. Das Befestigungsteil weist ein unteres Verbindungsteil auf, welches an der Unterseite des Halteelements angeordnet und mit dem oberen Verbindungsteil verbindbar ist. Ein derartiges Befestigungsteil ist sehr sicher und einfach an dem Halteelement festlegbar.

In einer dazu alternativen Ausführungsform hat das Befestigungsteil einen die Perforierung des Halteelements von dessen Unterseite aus durchsetzenden Steckzylinder, an dessen Umfangsbereich das wenigstens eine Rastelement angeordnet ist, so dass sein Rastabschnitt die Oberseite des Halteelements in Montagestellung hintergreift, während die Anlagefläche des Befestigungsteils nach oben weist und zur Anlage an die Unterseite des Halteelements konzipiert ist. Der Vorteil dieser Packvorrichtung besteht darin, dass das Packelement von unten montiert und demontiert werden können, was den gesamten Montage- und Demontagevorgang erheblich beschleunigt. Das horizontale Profil des Steckzylinders kann vorzugsweise kreisrund sein.

In diesem Fall hat das Tragelement einen die Stirnseite des Steckzylinders hintergreifenden Flansch, dessen Durchmesser kleiner als der Durchmesser der Perforierung des Halteelements oder des Steckzylinders ist. Auf diese Weise kann auch der Flansch, der die Bewegung des Tragelements in dem Befestigungsteil begrenzt, von unten durch die Perforierung durchgesteckt werden, so dass die gesamte Montage des Packelements von unten aus möglich ist.

Vorzugsweise ist das Packelement in sich bekannter Weise rotationssymmetrisch, natürlich bis auf die Rastnasen, die lediglich vorzugsweise rotationssymmetrisch angeordnet sind. In gleicher Weise ist auch die Perforierung in dem Halteelement kreisrund. Eine derartige Ausführung ist zum einen leicht herzustellen und erlaubt andererseits die Übertragung hoher Kräfte zwischen dem Halteelement und dem Packelement.

Es ist für den Fachmann offensichtlich, dass die oben genannten Ausführungsbeispiele in beliebiger Weise miteinander kombiniert werden können. Elemente in den Ansprüchen können einfach oder mehrfach vorgesehen sein.

Folgende Ausdrücke werden synonym verwendet: Packelement - Packtulpe; Rastabschnitte - Rastnasen;

Die Erfindung wird nachfolgend beispielhaft anhand der schematischen Zeichnung beschrieben. In dieser zeigen:
- Fig. 1: eine perspektivische Ansicht eines Packelements in Montagestellung an einem Halteelement,
- Fig. 2: einen vertikalen Schnitt durch das Packelement gemäß Fig. 1,
- Fig. 3: ein Detail III des Packelements aus Fig. 2,
- Fig. 4: ein der Fig. 3 entsprechendes Detail einer alternativen Form eines Packelements, bei welcher eine zylindrische Aufnahme des Befestigungsteils für das Tragelement nach oben konisch aufgeweitet ist, und
- Fig. 5: eine weitere Ausführungsform eines Packelements, das von der Unterseite des Halteelements aus montierbar und demontierbar ist.

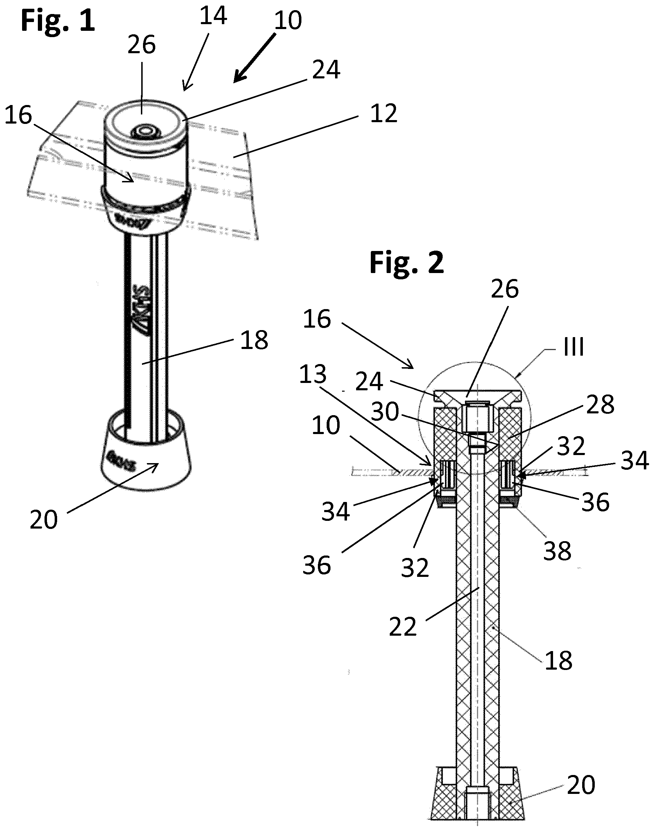

Fig. 1 zeigt einen Ausschnitt einer Packvorrichtung 10 umfassend ein sich horizontal erstreckendes Halteelement 12, welches eine Vielzahl von Perforierungen 13 aufweist, in welchen jeweils ein Packelement bzw. eine Packtulpe 14 aufgenommen ist. Die Ausführungsform wird nun unter Bezugnahme auf die Fig. 1 bis 3 beschrieben. Das Packelement 14 hat ein oberes Befestigungsteil 16 zur Befestigung an dem Halteelement 12, ein in dem Halteelement 12 in vertikaler Richtung axial verstellbar gehaltenes Tragelement 18, an dessen unterem Ende ein Greifteil 20 angeordnet, zum Beispiel mit dem Tragelement 18 verschraubt, ist. Das Tragelement 18 ist in Art eines Hohlzylinders ausgebildet und hat in seinem Inneren eine Vakuumleitung 22 (Fig. 2). An seinem oberen Ende hat das Tragelement 18 einen Flansch 24, mit welchem es an der oberen Stirnseite des Befestigungsteils 16 anliegt. In dem Flansch 24 ist ein Konus 26 zur Aufnahme eines Vakuumanschlusses angeordnet. Das Befestigungsteil 16 weist ein oberes Verbindungsteil in Form eines Hohlzylinders 28 auf, welcher eine zentrale kreisrunde Aufnahmebohrung 30 für die Aufnahme des Tragelements 18 aufweist. Die Perforierung 13 des Halteelements 12 ist kreisrund ausgebildet und hat zwei gegenüberliegende Fixierausnehmungen, die mit seitlich hervorstehenden Sicherungsvorsprüngen bzw. -rippen 32 an dem Hohlzylinder 28 zusammenwirken, so dass das Befestigungsteil 16 an dem Halteelement 12 rotativ unbeweglich festgelegt ist. Der Hohlzylinder 28 des Befestigungsteils 16 hat eine nach unten weisende Anlagefläche zur Anlage an die Oberseite des Halteelements 12 auf, die jedoch aus der Zeichnung nicht ersichtlich ist. Im gesamten Umfangsbereich des Hohlzylinders 28 sind kranzförmig Rastelemente 34 ausgebildet, die mit ihrem freien beweglichen Ende nach unten ragen und Rastnasen 36 aufweisen. Die sich nach außen erstreckende Rastnasen 36 haben Rastabschnitte, die an der Unterseite des Halteelements 12 anliegen, wenn das Befestigungsteil 16 mit seiner nach unten weisenden Anlagefläche an der Oberseite des Halteelements anliegt. Das Befestigungsteil 16 wird somit sicher an dem Halteelement 12 gehalten, indem die nach unten weisende Anlagefläche an der Oberseite des Halteelements 12 anliegt, während der Rastabschnitt der Rastnasen 36 an der Unterseite des Halteelements 12 anliegt. Das Befestigungsteil 16 bzw. der Hohlzylinder 28 kann somit von oben in die Perforierung des Halteelements 12 eingesetzt werden, wobei die Rastelemente 34 durch den Rand der Perforierung zum Zentrum des Hohlzylinders 28 ausgelenkt werden und nach außen in ihre Raststellung zurückschnappen, wenn die Anlagefläche des Befestigungsteils 16 an der Oberseite des Halteelements anliegt. Nun kann das Tragelement von oben durch die Aufnahmebohrung 30 des hohlzylindrischen Teils 28 geschoben werden, von unten wird eine in der Figur nicht dargestellte Feder auf das Tragelement 18 aufgeschoben und das Greifteil 20 wird auf das Tragelement 18 am unteren Ende aufgeschraubt, wobei die Feder zwischen dem Greifteil 20 und dem Befestigungselement 16 eingespannt ist. Das Befestigungselement 16 hat noch einen an der Unterseite des Halteelements 12 angeordneten unteren Verbindungsteil 38, der mit dem durch den Hohlzylinder 28 gebildeten oberen Verbindungsteil 28 des Befestigungsteils 16 verbindbar ist, zum Beispiel durch eine leichte Drehung in Art eines Bajonettverschlusses. Auf diese Weise wird das Befestigungsteil 16 sicher an dem Halteelement festgelegt.

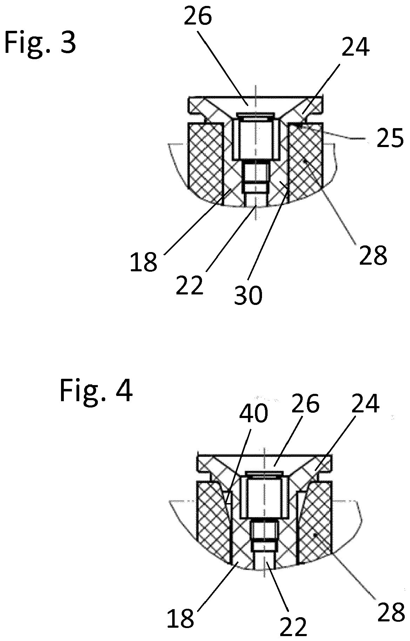

Fig. 4 zeigt eine etwas abgewandelte Ausführung des hohlzylindrischen Teils 28, bei welchem nämlich im Gegensatz zu den Fig. 1 bis 3 die Aufnahmebohrung 30 für das Tragelement 18 im Bereich ihres oberen Endes zu einem Konus 40 aufgeweitet ist. Dieses erlaubt ein leichteres Einschieben des Tragelements in das eingesetzte Befestigungsteil 16 von oben.

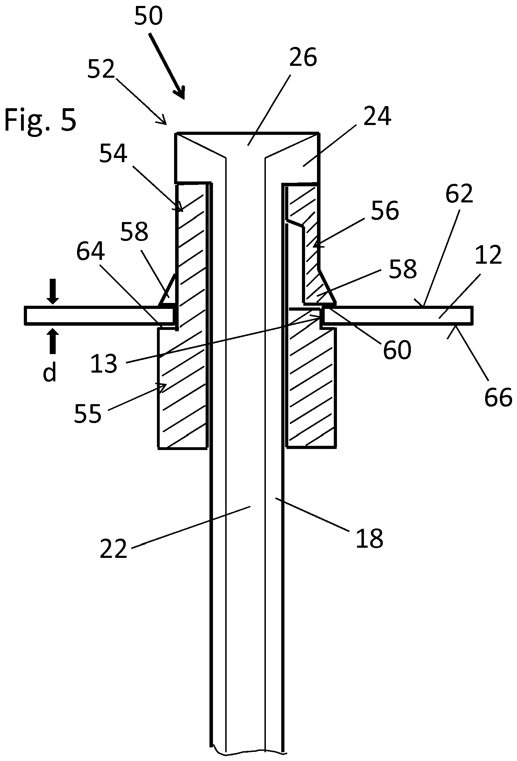

Schließlich zeigt Fig. 5 eine weitere Ausführungsform eines Packelements 50 zur Befestigung in einer kreisrunden Perforierung 13 eines Halteelements 12. Das Packelement 50 hat ein einstückig ausgebildetes Befestigungsteil 52, das einen sich nach oben erstreckenden Steckzylinder 54 aufweist und einen dazu konzentrischen und durchmessergrößeren Griffabschnitt 55 aufweist. Der Steckzylinder 54 kann aufgrund seines Durchmessers von unten aus durch die Perforierung 13 des Halteelements 12 eingeschoben werden, wohingegen der Griffabschnitt 55 durchmessergrößer als die Perforierung 13 ist und somit mit einer nach oben ragenden Anlagefläche 64 an der Unterseite 66 des Halteelements 12 in montierter Lange anliegt. An dem Steckzylinder 54 sind über den Umfang verteilt mehrere sich vertikal erstreckende elastische Rastelemente 56 angeordnet, die an ihrem unteren Ende Rastnasen 58 aufweisen, die in ihrer dargestellten Raststellung mit ihrem nach unten weisenden Rastabschnitt 60 an der Oberseite 62 des Halteelements 12 anliegen. Im Gegensatz dazu liegt die nach oben weisende Anlagefläche 64 des Befestigungsteils 52 an der Unterseite 66 des Halteelements an. Das Halteelement 12 wird somit zwischen der Anlagefläche 64 und dem Rastabschnitt 60 der Rastnasen 58 sicher festgelegt. Der Abstand zwischen dem senkrecht nach unten weisenden Rastabschnitt 60 der Rastnasen und der Anlagefläche 64 ist vorzugsweise in etwa so groß wie die Stärke d des Halteelements im Bereich der Perforierung 13. Dies führt dazu, dass das Befestigungsteil 52 an dem Halteelement 12 ohne vertikales Spiel festgelegt wird. Das Tragelement 18 und das Greifteil 20 sind wie in den Fig. 1 bis 3 ausgeführt, wobei hier zu bemerken ist, dass der Außendurchmesser des Flansches 24 am oberen Ende des Tragelements 18 den Durchmesser des zylindrischen Steckzylinders 54 nicht überragt, so dass das fertig montierte Packelement 50, bei welcher das Tragelement 18 bereits das Befestigungsteil 52 durchsetzt, fertig montiert von unten in das Halteelement montiert als auch wieder demontiert werden kann. Eine leichte Demontage ist möglich, wenn der nach unten gerichtete Rastabschnitt 60 der Rastnasen 58 nicht exakt horizontal ausgerichtet ist, sondern leicht nach unten innen abgeschrägt ist, so dass das Befestigungsteil 52 bei Anwendung einer Kraft nach unten dazu führt, dass die Rastelemente 56 an den Kanten der Perforierung 52 nach innen gedrückt werden, wodurch das Befestigungsteil 52 aus der Perforierung 13 wieder frei kommt.

Die Erfindung ist nicht auf die dargestellten Ausführungsbeispiele beschränkt, sondern kann innerhalb des Schutzbereichs der nachfolgenden Ansprüche variiert werden.

### Bezugszeichenliste

- 10: Packvorrichtung
- 12: Halteelement
- 13: Perforierung im Halteelement
- 14: Packelement - Packtulpe
- 16: Befestigungsteil
- 18: längliches Tragelement
- 20: Greifteil
- 22: Vakuumleitung
- 24: Flansch
- 26: Konus
- 28: oberes Verbindungsteil - Hohlzylinder
- 30: Aufnahmebohrung
- 32: Sicherungsvorsprünge - Sicherungsrippen
- 34: Rastelement
- 36: Rastnase
- 38: unteres Verbindungsteil
- 50: Packelement (alternative Ausführungsform)
- 52: Befestigungsteil
- 54: Steckzylinder
- 55: Griffabschnitt
- 56: Rastelement
- 58: Rastnase
- 60: Rastabschnitt der Rastnase
- 62: Oberseite des Halteelements
- 64: Anlagefläche
- 66: Unterseite des Halteelements

## Patentansprüche

1. Packelement (14; 50) zur Befestigung an einem Halteelement (12), welches Packelement ein längliches Tragelement (18) aufweist, an dessen einem Ende ein Befestigungsteil (16; 52) und an dessen anderem Ende ein Greifteil (20) angeordnet ist, wobei das Tragelement (18) im Befestigungsteil (16; 52) axial verschiebbar gehalten ist,
welches Befestigungsteil (16; 52) zur Befestigung des Packelements im Bereich mindestens einer in dem Halteelement (12) angeordneten Perforierung (13) ausgebildet ist und eine Anlagefläche (64) aufweist, die konzipiert ist, in einer Montagestellung des Befestigungsteils an einer ersten Seite des Halteelements anzuliegen,
welches Greifteil (20) zum Greifen eines Behälters, insbesondere einer Flasche ausgebildet ist,
wobei das Befestigungsteil (16; 52) wenigstens ein erstes Montageelement aufweist, welches mit wenigstens einem am Haltelement angeordneten oder an diesem ausgebildeten komplementären zweiten Montagelement zusammenwirkt, wobei das erste Montagelement in einer Montagestellung lösbar an dem zweiten Montageelement festlegbar ist, **dadurch gekennzeichnet, dass** das Befestigungsteil wenigstens ein insbesondere elastisch auslenkbares oder bewegbares Rastelement (32; 56) aufweist, das einen Rastabschnitt (60) aufweist, der konzipiert ist, das Halteelement (12) im Randbereich der Perforierung (13) zu hintergreifen, wobei der Abstand der Anlagefläche (64) von dem Rastabschnitt (60) in etwa der Materialstärke (d) des Haltelements (12) im Bereich der Perforierung (13) entspricht.

2. Packelement (14; 50) nach Anspruch 1, **dadurch gekennzeichnet, dass** das Rastelement (32; 56) auf einer ersten Seite eine Rastnase (34; 58) aufweist, an deren freiem Ende der Rastabschnitt (60) angeordnet ist.

3. Packelement (14; 50) nach Anspruch 2, **dadurch gekennzeichnet, dass** das Rastelement (32; 56) derart elastisch ist, dass es beim Einschieben des Befestigungsteils (16; 52) in die Perforierung (13) eines Halteelements (12) aus einer unausgelenkten Stellung von seiner ersten Seite weg auslenkbar ist und nach dem Anliegen der Anlagefläche (64) an dem Halteelement (12) aufgrund seiner Elastizität selbständig in eine unausgelenkte Raststellung zurückfedert.

4. Packelement (14; 50) nach Anspruch 3, **dadurch gekennzeichnet, dass** auf einer der ersten Seite abgewandten zweiten Seite des Rastelements (32; 56) in einer Sicherungsstellung ein Sicherungselement angeordnet ist, welches Sicherungselement eine elastische Auslenkung oder Bewegung des Rastelements in Richtung seiner zweiten Seite verhindert.

5. Packelement (14) nach einem der vorhergehenden Ansprüche, **dadurch gekennzeichnet, dass** das Befestigungsteil (16) wenigstens ein oberes Verbindungsteil (28) aufweist, das zur Anlage an einer Oberseite eines Halteelements (12) konzipiert ist und zumindest einen, vorzugsweise mehrere Rastelemente (32) aufweist, und welches Befestigungsteil (16) ein unteres Verbindungsteil (38) aufweist, welches zur Anlage an der Unterseite eines Halteelements (12) konzipiert und mit dem oberen Verbindungsteil (28) verbindbar ist.

6. Packelement (14; 50) nach Anspruch 5, **dadurch gekennzeichnet, dass** das untere Verbindungsteil (38) durch eine Drehung um die Längsachse des Tragelements (18) mit dem oberen Verbindungsteil (28) verbindbar ist.

7. Packelement (50) nach einem der Ansprüche 5 bis 6, **dadurch gekennzeichnet, dass** das Befestigungsteil (52) konzipiert ist, von unten in die Perforierung (13) eines sich horizontal erstreckenden Haltelements (12) eingesetzt zu werden, wobei das wenigstens eine Rastelement (56) am Umfangsbereich eines Steckzylinders (54) des vorzugsweise kreisrunden Befestigungsteils angeordnet ist, wobei der Rastabschnitt (60) des Rastelements (56) die Oberseite (62) des Halteelements (12) in Montagestellung des Packelements (50) hintergreift.

8. Packelement nach Anspruch 7, **dadurch gekennzeichnet, dass** das Tragelement (18) einen die Stirnseite des Steckzylinders (54) hintergreifenden Flansch (24) aufweist, dessen Durchmesser kleiner als der Durchmesser der Perforierung (13) des Halteelements (12) ist.

9. Packelement nach Anspruch 7 oder 8, **dadurch gekennzeichnet, dass** die Anlagefläche (64) des Befestigungsteils (52) nach oben weist und zur Anlage an die Unterseite (66) des Halteelements (12) konzipiert ist.

10. Packelement (14; 50) nach einem der vorhergehenden Ansprüche, **dadurch gekennzeichnet, dass** mehrere Rastelemente (32; 56) kranzförmig um den Umfang des Befestigungsteils (16; 52) verteilt angeordnet sind.

11. Packelement (14; 50) nach einem der vorhergehenden Ansprüche, **dadurch gekennzeichnet, dass** das Tragelement (18) einen die Stirnseite des Befestigungsteils (16; 52) hintergreifenden Flansch (24) aufweist.

12. Packelement (14; 50) nach einem der vorhergehenden Ansprüche, **dadurch gekennzeichnet, dass** das Befestigungsteil (16; 52) als hohlzylindrisches Teil ausgebildet ist und eine vertikal durchgehende, insbesondere zentrische Aufnahmebohrung (30) für das Tragelement (18) aufweist.

13. Packelement (14; 50) nach einem der vorhergehenden Ansprüche, **dadurch gekennzeichnet, dass** zwischen dem Befestigungsteil (16; 52) und dem Greifteil (20) eine Feder angeordnet ist, die das Tragelement (18) vorzugsweise umgibt.

14. Packvorrichtung enthaltend wenigstens eine gesteuert bewegbare Haltevorrichtung mit wenigstens einem vorzugsweise flächigen, insbesondere sich horizontal erstreckenden Halteelement (12), an dem eine Vielzahl von Packelementen (14; 50) nach einem der vorhergehenden Ansprüche derart montiert sind, dass sie sich von der Fläche des Halteelements (12) aus nach unten erstrecken, wobei jedes Packelement (14; 50) vorzugsweise mit seinem Befestigungsteil (16; 52) die Perforierung (13) des Halteelements (12) durchsetzt.

15. Packvorrichtung nach Anspruch 14, **dadurch gekennzeichnet, dass** die Perforierung (13) kreisrund ist und das Packelement (14; 50) im Wesentlichen rotationssymmetrisch sind.

## Claims

1. Packing element (14; 50) for fastening to a retaining element (12), wherein the packing element has an elongated carrier element (18), on one end of which a fastening part (16; 52) is arranged, and on the other end of which a gripping part (20) is arranged, wherein the carrier element (18) is retained in the fastening part (16; 52) in an axially movable manner, and wherein the fastening part (16; 52) is designed to fasten the packing element in the region of at least one perforation (12) arranged in the retaining element (13), and has a contact surface (64) which is configured to lie against a first side of the retaining element in a mounting position of the fastening part, which gripping part (20) is configured to grip a container, in particular a bottle, wherein the fastening part (16; 52) has at least one first mounting element, which interacts with at least complementary second mounting element, which is arranged or formed on the retaining element, wherein the first mounting element can be detachably fastened to the second mounting element in a mounting position, **characterised in that** the fastening part comprises at least one locking engagement element (32; 56) which in particular is elastically deflectable or movable, which comprises a locking engagement section (60), which is designed to engage behind the retaining element (12) in the edge region of the perforation (13), wherein the distance interval of the contact surface (64) from the locking engagement section (60) corresponds approximately to the material thickness (d) of the retaining element (12) in the region of the perforation (13).

2. Packing element (14; 50) according to claim 1, **characterised in that** the locking engagement element (32; 56) has an engagement nose (34; 58) on a first side, at the free end of which the locking engagement section (60) is arranged.

3. Packing element (14; 50) according to claim 2, **characterised in that** the locking engagement element (32; 56) is elastic in such a way that, at the insertion of the fastening part (16; 52) into the perforation (13) of a retaining element (12), it can be deflected out of a non-deflected position, away from its first side, and, after the contact surface (64) comes in contact at the retaining element (12), it springs back due to its own elasticity, automatically, into a non-deflected engagement position.

4. Packing element (14; 50) according to claim 3, **characterised in that**, on a second side of the locking engagement element (32; 56) facing away from the first side, a securing element is arranged in a securing position, which securing element prevents an elastic deflection or movement of the locking engagement element in the direction of its second side.

5. Packing element (14) according to any one of the preceding claims, **characterised in that** the fastening part (16) comprises at least one upper connection part (28), which is designed to come in contact with an upper side of a retaining element (12), and comprises at least one, and preferably several, locking engagement elements (32), and which fastening part (16) comprises a lower connection part (38), which is designed to come in contact with the under side of a retaining element (12) and can be connected to the upper connection part (28).

6. Packing element (14; 50) according to claim 5, **characterised in that** the lower connection part (38) can be connected to the upper connection part (18) by a rotation about the longitudinal axis of the carrier element (28).

7. Packing element (50) according to any one of the preceding claims 5 to 6, **characterised in that** the fastening part (52) is designed to be inserted from below into the perforation (13) of a retaining element (12) extending horizontally, wherein the at least one locking engagement element (56) is arranged in the circumferential region of an insertion cylinder (54) of the preferably circular fastening part, wherein the locking engagement section (60) of the locking engagement element (56) engages behind the upper side (62) of the retaining element (12) in the mounting position of the packing element (50).

8. Packing element according to claim 7, **characterised in that** the carrier element (18) comprises a flange (54) which engages behind the face side of the fastening part (24), of which the diameter is smaller than the diameter of the perforation (13) of the retaining element (12).

9. Packing element according to claim 7 or 8, **characterised in that** the contact surface (64) of the fastening part (52) faces upwards and is designed to come in contact with the under side (66) of the retaining element (12).

10. Packing element (14; 50) according to any one of the preceding claims, **characterised in that** several locking engagement elements (32; 56) are arranged distributed in a wreath pattern around the circumference of the fastening part (16; 52).

11. Packing element (14; 50) according to any one of the preceding claims, **characterised in that** the carrier element (18) comprises a flange (24) which engages behind the face side of the fastening part (16; 52).

12. Packing element (14; 50) according to any one of the preceding claims, **characterised in that** the fastening part (16; 52) is configured as a hollow cylindrical part, and exhibits a vertical receiving borehole (30), in particular centric, for the carrier element (18).

13. Packing element (14; 50) according to any one of the preceding claims, **characterised in that** a spring is arranged between the fastening part (16; 52) and the gripping part (20), which preferably surrounds the carrier element (18).

14. Packing device containing at least one controlled movable retaining device, with at least one retaining element (12), preferably flat, in particular extending horizontally, mounted at which are a plurality of packing elements (14; 50) according to any one of the preceding claims, in such a way that they extend from the surface of the retaining element (12) downwards, wherein each packing element (14; 50) preferably passes through the perforation (13) of the retaining element (12) with its fastening part (16; 52).

15. Packing device according to claim 14, **characterised in that** the perforation (13) is circular and the packing element (14; 50) is essentially rotation-symmetrical.

## Revendications

1. Elément d'emballage (14 ; 50) à fixer sur un élément de retenue (12), lequel élément d'emballage présente un élément de support (18) allongé, à l'une des extrémités duquel est disposée une partie de fixation (16 ; 52) et à l'autre extrémité duquel est disposée une partie de préhension (20), dans lequel l'élément de support (18) est retenu de manière à pouvoir se déplacer axialement dans la partie de fixation (16 ; 52),
laquelle partie de fixation (16; 52) est conçue pour fixer l'élément d'emballage dans la zone d'au moins une perforation (13) disposée dans l'élément de retenue (12) et présente une surface d'appui (64), qui est conçue pour prendre appui sur une première face de l'élément de retenue dans une position de montage de la partie de fixation,
laquelle partie de préhension (20) est conçue pour saisir un contenant, en particulier une bouteille,
dans lequel la partie de fixation (16 ; 52) présente au moins un premier élément de montage, lequel coopère avec au moins un deuxième élément de montage complémentaire disposé sur l'élément de retenue ou réalisé sur celui-ci, dans lequel le premier élément de montage peut être fixé sur le deuxième élément de montage de manière détachable dans une position de montage, **caractérisé en ce que** la partie de fixation présente au moins un élément d'encliquetage (32 ; 56) pouvant être dévié ou mobile en particulier de manière élastique, qui présente une section d'encliquetage (60), qui est conçue pour venir se bloquer derrière l'élément de retenue (12) dans la zone de bord de la perforation (13), dans lequel la distance entre la surface d'appui (64) et la section d'encliquetage (60) correspond à peu près à l'épaisseur de matériau (d) de l'élément de retenue (12) dans la zone de la perforation (13).

2. Elément d'emballage (14 ; 50) selon la revendication 1, **caractérisé en ce que** l'élément d'encliquetage (32 ; 56) présente sur une première face un bec d'encliquetage (34 ; 58), à l'extrémité libre duquel est disposée la section d'encliquetage (60).

3. Elément d'emballage (14 ; 50) selon la revendication 2, **caractérisé en ce que** l'élément d'encliquetage (32 ; 56) est élastique de telle sorte qu'il peut être dévié à distance de sa première face à partir d'une position non déviée lors de l'introduction de la partie de fixation (16 ; 52) dans la perforation (13) d'un élément de retenue (12) et, après l'appui de la surface d'appui (64) sur l'élément de retenue (12), revient automatiquement comme un ressort dans une position d'encliquetage non déviée en raison de son élasticité.

4. Elément d'emballage (14 ; 50) selon la revendication 3, **caractérisé en ce qu'**un élément de blocage, lequel élément de blocage empêche une déviation ou un déplacement élastique de l'élément d'encliquetage en direction de sa deuxième face, est disposé sur une deuxième face de l'élément d'encliquetage (32 ; 56) opposée à la première face.

5. Elément d'emballage (14) selon l'une quelconque des revendications précédentes, **caractérisé en ce que** la partie de fixation (16) présente au moins une partie de liaison supérieure (28), qui est conçue pour être en appui contre une face supérieure d'un élément de retenue (12) et présente au moins un, de préférence plusieurs éléments d'encliquetage (32), et laquelle partie de fixation (16) présente une partie de liaison inférieure (38), laquelle est conçue pour être en appui sur la face inférieure d'un élément de retenue (12) et peut être reliée à la partie de liaison supérieure (28).

6. Elément d'emballage (14 ; 50) selon la revendication 5, **caractérisé en ce que** la partie de liaison inférieure (38) peut être reliée à la partie de liaison supérieure (28) par une rotation autour de l'axe longitudinal de l'élément de support (18).

7. Elément d'emballage (50) selon l'une quelconque des revendications 5 à 6, **caractérisé en ce que** la partie de fixation (52) est conçue pour être insérée par le bas dans la perforation (13) d'un élément de retenue (12) s'étendant horizontalement, dans lequel l'au moins un élément de retenue (56) est disposé sur la zone périphérique d'un cylindre d'enfichage (54) de la partie de fixation de préférence circulaire, dans lequel la section d'encliquetage (60) de l'élément d'encliquetage (56) vient se bloquer derrière la face supérieure (62) de l'élément de retenue (12) dans la position de montage de l'élément d'emballage (50).

8. Elément d'emballage selon la revendication 7, **caractérisé en ce que** l'élément de support (18) présente une bride (24), venant se bloquer derrière la face frontale du cylindre d'enfichage (54), dont le diamètre est inférieur au diamètre de la perforation (13) de l'élément de retenue (12).

9. Elément d'emballage selon la revendication 7 ou 8, **caractérisé en ce que** la surface d'appui (64) de la partie de fixation (52) est dirigée vers le haut et est conçue pour prendre appui sur la face inférieure (66) de l'élément de retenue (12).

10. Elément d'emballage (14; 50) selon l'une quelconque des revendications précédentes, **caractérisé en ce que** plusieurs éléments d'encliquetage (32 ; 56) sont disposés de manière répartie en forme de couronne autour de la périphérie de la partie de fixation (16 ; 52).

11. Elément d'emballage (14; 50) selon l'une quelconque des revendications précédentes, **caractérisé en ce que** l'élément de support (18) présente une bride (24) venant se bloquer derrière la face frontale de la partie de fixation (16 ; 52).

12. Elément d'emballage (14 ; 50) selon l'une quelconque des revendications précédentes, **caractérisé en ce que** la partie de fixation (16 ; 52) est réalisée en tant que partie cylindrique creuse et présente un trou de logement (30) verticalement continu, en particulier central, pour l'élément de support (18).

13. Elément d'emballage (14 ; 50) selon l'une quelconque des revendications précédentes, **caractérisé en ce qu'**un ressort, qui entoure de préférence l'élément de support (18), est disposé entre la partie de fixation (16 ; 52) et la partie de préhension (20).

14. Dispositif d'emballage contenant au moins un dispositif de retenue mobile de façon commandée avec au moins un élément de retenue (12) de préférence plat, s'étendant en particulier horizontalement, sur lequel sont montés une pluralité d'éléments d'emballage (14 ; 50) selon l'une quelconque des revendications précédentes, de telle sorte qu'ils s'étendent vers le bas à partir de la surface de l'élément de retenue (12), dans lequel chaque élément d'emballage (14 ; 50) traverse la perforation (13) de l'élément de retenue (12) de préférence avec sa partie de fixation (16 ; 52).

15. Dispositif d'emballage selon la revendication 14, **caractérisé en ce que** la perforation (13) est circulaire et l'élément d'emballage (14 ; 50) est sensiblement à symétrie de rotation.
